# FASCICULE DE BREVET EUROPEEN

(11) **EP 0 947 761 B1**
(45) Date de publication et mention de la délivrance du brevet: **06.02.2008**
(21) Numéro de dépôt: 99400759.9
(22) Date de dépôt: 29.03.1999
(51) Int. Cl.: B60Q 1/26, F21S 8/10, F21V 5/00

(54) **Feu de signalisation comprenant plusieurs sources lumineuses**
Signalleuchte mit mehreren Lichtquellen
Signaling light with several light sources

(30) Priorité: 31.03.1998 FR 9803982
(43) Date de publication de la demande: 06.10.1999
(73) Titulaire: VALEO VISION, 93000 Bobigny (FR)
(72) Inventeur: Godbillon, Vincent, 75011 Paris (FR)
(74) Mandataire: Renous Chan, Véronique

(56) Documents cités:
- EP-A- 0 648 969
- EP-A- 0 762 049
- DE-A- 3 916 875
- FR-A- 2 707 222
- US-A- 5 093 768

## Description

La présente invention concerne les feux de signalisation lumineuse pour véhicules automobiles.

Un tel feu de signalisation selon le préambule de la revendication 1 est connu du document EP 0 648 969 A.

Elle s'applique notamment aux feux de signalisation du type « feux stop », c'est-à-dire aux feux de signalisation de freinage qui peuvent être montés à l'intérieur de l'habitacle contre la lunette arrière du véhicule, ou être intégrés dans des organes minces situés à l'arrière du véhicule tels que des ailerons ou des becquets aérodynamiques.

Les premiers feux de ce type présentaient l'inconvénient de fournir un éclairement non homogène, en dépit des dispositifs d'étalement de la lumière utilisés qui consistaient généralement en des billes ou tores intégrés dans la glace de fermeture ou dans une plaque optique du feu. Cet inconvénient, s'il est en général tolérable du point de vue de la réglementation, est préjudiciable du point de vue de l'esthétique alors que l'homogénéité de l'éclairement des feux revêt de nos jours une importance croissante.

On connaît par le document 2 614 969 un feu à source unique dont l'éclairement est homogène. Ce feu comprend dans un boîtier un écran optique transparent ou translucide que l'on appelle "bonnette", intercalé entre une source lumineuse unique et une plaque optique essentiellement plane et s'étendant dans la direction perpendiculaire à l'axe optique du feu. La configuration géométrique particulière de la bonnette assure que la densité surfacique de flux lumineux arrivant sur la plaque est essentiellement constante sur toute la surface de ladite plaque. Enfin, la surface de la plaque est pourvue de stries redressant les rayons lumineux issus de la bonnette afin de transmettre à l'extérieur un faisceau dans l'angle solide prévu par les règlements.

Mais les constructeurs conçoivent actuellement des feux stop de dimensions parfois importantes, qui mettent en oeuvre une pluralité de sources lumineuses. On pourrait certes imaginer utiliser un dispositif constitué de la juxtaposition de sous-ensembles optiques selon le document 2 614 969, présentant un éclairement homogène à l'intérieur de chaque sous-ensemble, mais un tel dispositif présenterait alors des irrégularités de l'éclairement à la jonction de sous-ensembles adjacents.

Un but de la présente invention est de remédier à cet inconvénient et de réaliser un feu de signalisation pouvant être de dimensions importantes et mettant en oeuvre plusieurs sources lumineuses, tout en présentant à l'observateur un éclairement homogène, particulièrement avantageux du point de vue esthétique.

Un autre but de l'invention est de pouvoir limiter le nombre de sources d'un tel feu, pour une dimension donnée, sans nullement compromettre l'homogénéité de la plage éclairante du feu allumé.

Afin d'atteindre ces buts, la présente invention propose selon un premier aspect un feu de signalisation pour véhicule automobile, comprenant une pluralité de sources lumineuses et des moyens de traitement optique aptes à redresser la lumière issue des sources lumineuses pour qu'elle se propage dans une direction essentiellement parallèle à une direction générale d'émission, caractérisé en ce que les moyens de traitement optique comprennent, en association avec chaque source, un premier élément apte à répartir la lumière, dans un plan essentiellement perpendiculaire à la direction générale d'émission, de façon essentiellement homogène sur un second élément en forme générale de plaque et apte à redresser la lumière incidente vers ladite direction générale d'émission, et en ce qu'il est prévu à la transition entre deux seconds éléments adjacents au moins une strie, saillante vers l'intérieur du feu et apte à redresser vers ladite direction générale d'émission la lumière issue des deux sources homologues desdits seconds éléments.

Des aspects préférés, mais non limitatifs du feu selon l'invention sont les suivants :
- la strie saillante est unique et comporte deux faces,
- les moyens de redressement comprennent des stries de redressement saillantes de la surface dudit second élément vers l'intérieur du feu et la ou les stries saillantes sont plus saillantes vers l'intérieur du feu que les autres stries de la surface des seconds éléments,
- chaque transition entre deux seconds éléments adjacents comporte N stries saillantes à deux faces obliques,
- les sources lumineuses sont essentiellement alignées,
- la ou les strie(s) saillante(s) comporte(nt chacune) deux faces obliques et opposées par rapport à un plan contenant la direction générale d'émission.

Selon un deuxième aspect, l'invention propose également une plaque optique comprenant des moyens de traitement optique aptes à redresser selon une direction générale d'émission la lumière issue d'une source lumineuse et arrivant sur la plaque avec une première incidence donnée sensiblement constante, caractérisée en ce qu'une partie desdits moyens de traitement est également exposée à la lumière d'une seconde source lumineuse arrivant avec une deuxième incidence sensiblement constante, et est apte à redresser la lumière des deux sources lumineuses vers ladite direction générale d'émission.

Des aspects préférés, mais non limitatifs de la plaque otique selon l'invention sont les suivants :
- les moyens de traitement comprennent au moins une strie saillante à deux faces,
- la strie saillante est unique et comporte deux faces,
- il est prévu des stries de redressement saillantes de la surface de ladite plaque et la ou les stries saillantes sont plus saillantes hors de la plaque que les stries de redressement,
- les stries saillantes sont multiples,
- la valeur de ladite seconde incidence est opposée à la valeur de ladite première incidence,
- la ou les strie(s) saillante(s) comporte(nt chacune) deux faces obliques et opposées par rapport à un plan perpendiculaire à la ligne joignant les deux sources d'émission.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels :
la figure 1 est une vue schématique en coupe d'une cellule optique reprenant des éléments d'un feu de signalisation de type connu comportant une source lumineuse unique et un dispositif à base de stries permettant d'assurer que l'éclairement du feu est homogène,
la figure 2 est une vue schématique en coupe d'un feu selon l'invention constitué de la combinaison de cellules analogues à celle représentée sur la figure 1, et de dispositifs spécifique de traitement optique à la jonction de deux cellules voisines,
la figure 3 est une vue extraite de la figure 2 détaillant un dispositif de traitement de l'éclairement à la jonction de deux cellules voisines,
la figure 4 représente une variante de réalisation d'un dispositif de traitement optique à la jonction de deux cellules voisines.

En préalable à la description qui suit, on définit trois directions orthogonales X, Y et Z qui seront utilisées dans les figures et dans la description, Y étant la direction des axes optiques des parties de feux représentées sur les figures et servant de support à la description qui suit, et X et z étant les directions horizontale et verticale, respectivement.

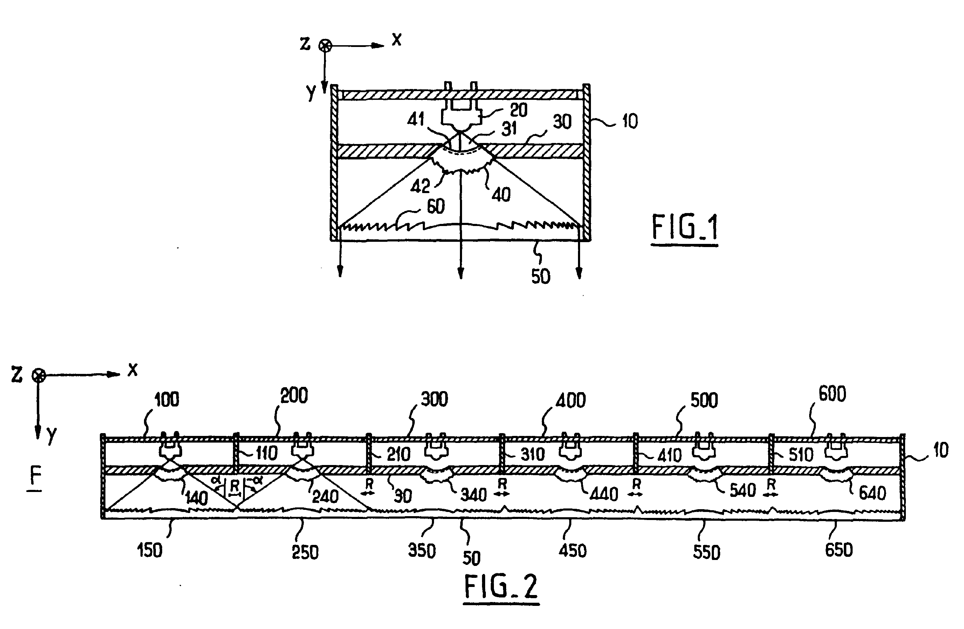

Sur la figure 1, on a représenté une cellule optique formée d'un boîtier ou socle 10 sur le fond du quel est montée une source lumineuse telle qu'une diode dite "Brewster" 20, d'une paroi opaque 30 comprenant en son centre une ouverture circulaire 31, d'une bonnette hémisphérique 40 de répartition des rayons lumineux issus de la diode 20, couvrant l'ouverture 31, réalisée de préférence d'un seul tenant avec la paroi opaque 30 et munie sur une face interne de stries 41 et sur sa face externe de stries 42, et d'une deuxième plaque 50, transparente et munie sur sa face interne de stries 60. Une telle cellule optique en tant que telle, à partir de laquelle il est possible de constituer un feu en lui ajoutant une glace de fermeture (ou en assurant la fermeture du feu par la plaque 50, qui joue alors également le rôle de glace et est dans ce cas pourvue de moyens de diffusion de la lumière), est de type connu. On ne détaillera donc pas plus avant son fonctionnement qui assure que l'éclairement issu de la plaque 50 est homogène selon les direction X et Z, grâce aux stries sur la face interne et sur la face externe de la surface de la bonnette, respectivement, ou inversement, et l'on se référera au document FR-A-2 614 969 précité.

La figure 2 représente une forme de réalisation d'un feu de signalisation (F) selon l'invention, regroupant dans un boîtier unique 10 six cellules optiques 100 à 600 analogues à celle de la figure 1. Dans cette forme de réalisation, des parois opaques 110 à 510 s'étendent selon Y entre le fond du boîtier 10 et une première plaque 30 comportant six bonnettes 140 à 640. La deuxième plaque 50 du feu est constituée des zones 150 à 650 qui sont d'un seul tenant dans le mode de réalisation décrit, mais pourraient également être séparées et accolées les unes aux autres.

Pour assurer une transition homogène de l'éclairement entre deux zones 150 à 650 voisines, on prévoit une zone de transition R recevant des rayons lumineux issus de chacune des deux bonnettes des deux cellules adjacentes, et dans cette zone de transition des aménagements de traitement optique aptes à agir sur les rayons lumineux issus des deux bonnettes ; on va maintenant détailler le fonctionnement de ces aménagements.

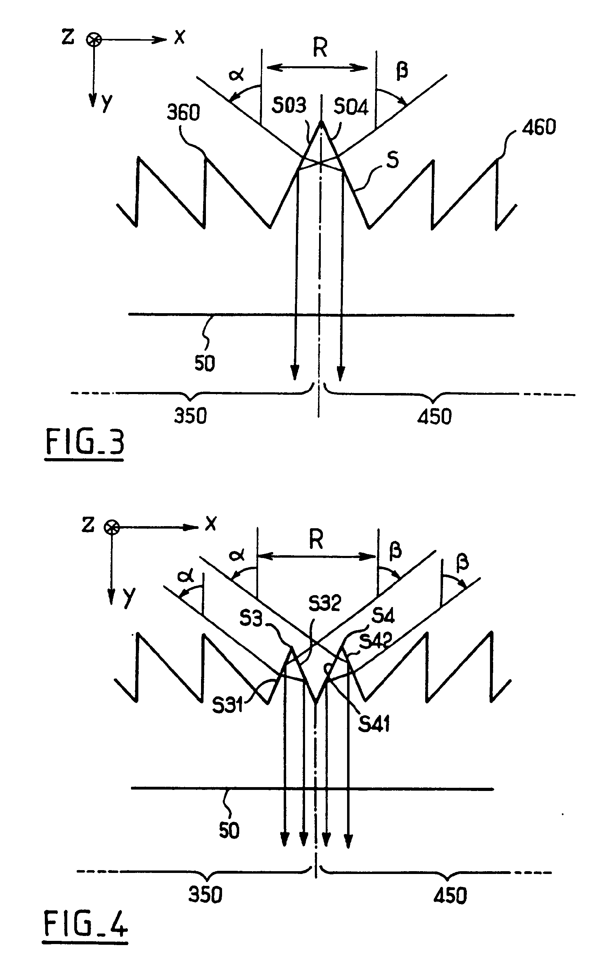

En référence à la figure 3, on a représenté une vue de détail de la transition des zones adjacentes 350 et 450 du feu de signalisation représenté sur la figure 2. Cette figure et la description lui étant associée sont également valables pour les autres transitions de deux zones 150 à 650 adjacentes quelconques du feu de la figure 2. On retrouve sur la figure 3 la zone de transition R, déjà représentée sur la figure 2, exposée à la fois aux rayons lumineux issus de la bonnette 340 qui arrivent avec des incidences individuelles étroitement regroupées autour d'une première incidence moyenne α (l'incidence étant définie par rapport à la direction Y et mesurée positivement dans le sens trigonométrique), et aux rayons lumineux issus de la bonnette 440 qui arrivent avec des incidences individuelles sensiblement égales et comprises autour d'une deuxième incidence moyenne β.

Dans le présent mode de réalisation, les angles α et β ont des valeurs opposées car les cellules du dispositif selon ce mode de réalisation sont identiques. Toutefois, les angles α et β pourront selon l'invention avoir chacun des valeurs quelconques comprises entre 0 et 90°.

La zone 350 porte sur sa face interne au voisinage de la transition entre les cellules 300 et 400 des stries verticales 360 destinées à redresser par réflexion interne les rayons lumineux issus de la bonnette 340 afin de donner à ces rayons une direction essentiellement parallèle à Y. De même, la zone 450 porte sur sa face interne des stries verticales 460 destinées à redresser par réflexion interne les rayons lumineux issus de la bonnette 440 afin de donner à ces rayons une direction essentiellement parallèle à Y. A la transition des faces internes des zones 350 et 450 se trouve une strie S en forme de dent saillante vers l'intérieur du feu et comportant deux faces S03 et S04, symétriques par rapport à la direction Y dans le présent mode de réalisation du fait que les valeurs de α et β sont opposées. La densité surfacique de flux lumineux reçu par les zones 350 et 450 étant essentiellement constante du fait que les cellules optiques sont identiques, l'éclairement issu des zones 350 et 450 est constant en dehors de la zone de transition R.

La fonction de la strie S est d'assurer que les rayons arrivant sur la zone de transition R sont également déviés dans la direction Y. A cet effet, la strie S s'étend suffisamment selon Y vers l'intérieur du feu pour que sa face S03 intercepte l'essentiel des rayons issus de la bonnette 340 et dirigés vers la zone 450. Ces rayons, qui arrivent tous sur la face S03 avec une incidence sensiblement égale à α, traversent la zone 50 par réfraction au travers de la face S03 puis par réflexion interne sur la face S04. L'inclinaison des faces S03 et S04 est telle que les rayons quittent ensuite ladite plaque 50 selon une direction essentiellement parallèle à Y. De même, la face S04 intercepte l'essentiel des rayons issus de la bonnette 440 et dirigés vers la zone 350 et ces rayons, qui arrivent sur la face S04 avec une incidence sensiblement égale à β, sont déviés dans la direction Y par réfraction au travers de la face S04 puis réflexion interne sur la face S03.

Le feu de signalisation représenté sur les figures 2 et 3 délivre donc un éclairement généralement constant selon X, la répartition de l'éclairement selon Z est assurée quant à elle par les stries internes 41 des bonnettes, identiques.

La figure 4 présente une variante de réalisation de la strie S sous forme d'une première strie S3 comportant deux faces S31 et S32, et d'une deuxième strie S4 comportant deux faces S41 et S42. Dans cette variante de réalisation, les faces S31 et S41 reçoivent des rayons issus de la bonnette 340, et les faces S32 et S42 reçoivent des rayons issus de la bonnette 440. Cette variante permet d'assurer la même fonction que la strie S de la figure 3, les stries S3 et S4 interceptant et redressant selon Y l'essentiel des rayons issus d'une cellule et dirigés vers la glace de la cellule adjacente, sans augmenter l'épaisseur maximale de la plaque 50.

Si la largeur de la zone de transition doit être importante ou si on souhaite réduire l'épaisseur de la plaque 50, il est possible de réaliser un dispositif assurant la même fonction que la strie S avec plusieurs stries à deux faces obliques essentiellement symétriques alignées sur la face interne de la plaque 50.

Il convient d'ajouter à la description qui vient d'être faite qu'en pratique, un feu réalisé selon l'invention devrait également comporter une glace de fermeture comportant des billes ou des tores pour étaler la lumière issue de la deuxième plaque 50 dans l'angle solide réglementaire.

En outre, l'utilisation des bonnettes 40 et des plaques 50 permet d'augmenter les angles α et β qui définissent l'étendue des zones 50 associées à chaque source lumineuse. Il est ainsi possible dans le feu selon l'invention d'augmenter l'allongement du feu par rapport à un feu classique en conservant le même nombre de sources lumineuses, ou de réduire le nombre de sources lumineuses pour un allongement du feu donné, ce qui améliore le prix de revient de l'ensemble.

Ainsi, un feu de signalisation réalisé selon l'invention peut-il avoir un allongement important en mettant en oeuvre plusieurs sources lumineuses alignées, obéissant en ceci à l'évolution générale de la forme des feux stop surélevés, tout en améliorant l'aspect esthétique de l'éclairement de ce feu en fournissant un éclairement parfaitement homogène ne laissant aucunement paraître à l'extérieur la construction interne du feu.

Bien entendu, l'invention n'est pas limitée au mode de réalisation décrit dans le présent texte. En particulier, l'homme du métier pourra réaliser des feux de forme et d'allongement quelconques mettant en oeuvre des cellules pouvant par exemple être de forme carrée, triangulaire ou hexagonale.

## Revendications

1. Feu (F) de signalisation pour véhicule automobile, comprenant une pluralité de sources lumineuses (20) et des moyens de traitement optique (30, 40-640, 50-650, S, S3, S4) aptes à redresser la lumière issue des sources lumineuses pour qu'elle se propage dans une direction essentiellement parallèle à une direction générale d'émission (Y), les moyens de traitement optique comprennent, en association avec chaque source, un premier élément (40-640) apte à répartir la lumière, dans un plan (XZ) essentiellement perpendiculaire à la direction générale d'émission (Y), de façon essentiellement homogène sur un second élément (50-650) en forme générale de plaque et apte à redresser la lumière incidente vers ladite direction générale d'émission (Y), **caractérisé en ce qu**'il est prévu à la transition (R) entre deux seconds éléments adjacents (350, 450) au moins une strie (S, S3, S4), saillante vers l'intérieur du feu et apte à redresser vers ladite direction générale d'émission (Y) la lumière issue des deux sources homologues desdits seconds éléments (350, 450).

2. Feu selon la revendication 1, **caractérisé en ce que** la strie saillante (S) est unique.

3. Feu selon la revendication 1 ou 2, **caractérisé en ce que** les moyens de redressement comprennent des stries de redressement (60, 360, 460) saillantes de la surface dudit second élément (50-650) vers l'intérieur du feu et **en ce que** la ou les stries saillantes (S, S3, S4) sont plus saillantes vers l'intérieur du feu que lesdites stries de redressement (60, 360, 460) des seconds éléments (50-650).

4. Feu selon l'une quelconque des revendications 1 à 3, **caractérisé en ce que** chaque transition (R) entre deux seconds éléments adjacents (350, 450) comporte N stries saillantes à deux faces obliques.

5. Feu selon l'une quelconque des revendications 1 à 4, **caractérisé en ce que** les sources lumineuse (20) sont essentiellement alignées.

6. Feu selon l'une quelconque des revendications 1 à 5, **caractérisé en ce que** la ou les strie(s) saillante(s) (S, S3, S4) comporte(nt chacune) deux faces obliques et opposées par rapport à un plan (YZ) contenant la direction générale d'émission (Y).

7. Plaque optique (50) comprenant des moyens de traitement optique (S, S3, S4) aptes à redresser selon une direction générale d'émission (Y) la lumière issue d'une source lumineuse (340) et arrivant sur la plaque (50) avec une première incidence donnée (α) sensiblement constante, **caractérisée en ce qu'**une partie desdits moyens de traitement est également exposée à la lumière d'une seconde source lumineuse (440) arrivant avec une seconde incidence (β), sensiblement constante, et est apte à redresser la lumière des deux sources lumineuses vers ladite direction générale d'émission (Y).

8. Plaque optique (50) selon la revendication 7, **caractérisée en ce que** ladite partie des moyens de traitement comprend au moins une strie saillante (S, S3, S4) à deux faces.

9. Plaque optique selon la revendication 8, **caractérisée en ce que** la strie saillante est unique .

10. Plaque optique selon la revendication 8 ou 9, **caractérisée en ce qu'**il est prévu des stries de redressement (60, 360, 460) saillantes de la surface de ladite plaque (50) et **en ce que** la ou les stries saillantes (S, S3, S4) sont plus saillantes hors de la plaque (50) que les stries de redressement (360, 460).

11. Plaque optique selon l'une quelconque des revendications 8 à 10, **caractérisée en ce que** les stries (S, S3, S4) sont multiples.

12. Plaque optique selon l'une quelconque des revendications 7 à 11, **caractérisée en ce que** la valeur de ladite seconde incidence (β) est opposée à la valeur de ladite première incidence (α).

13. Plaque optique selon l'une quelconque des revendications 7 à 12, **caractérisée en ce que** la ou les strie(s) saillante(s) comporte(nt chacune) deux faces obliques et opposées par rapport à un plan (YZ) perpendiculaire à la ligne joignant les deux sources lumineuses (340, 440).

## Claims

1. Indicator lamp (F) for motor vehicle, comprising a plurality of light sources (20) and optical processing means (30, 40-640, 50-650, S, S3, S4) adapted to straighten out the light emitted by the light sources, so that it is propagated in a direction essentially parallel to a general direction of emission (Y); the optical processing means comprise, in association with each source, a first element (40-640) adapted to distribute the light in a plane (XZ) essentially perpendicular to the general direction of emission (Y), in an essentially uniform way onto a generally plate-shaped second element (50-650) and adapted to straighten out the incidental light towards said general direction of emission (Y), **characterized in that** at least one striation (S, S3, S4), projecting towards the interior of the lamp and adapted to straighten out the light emitted by the two homologous sources of said second elements (350, 450) towards said general direction of emission (Y), is provided at the transition (R) between two second adjacent elements (350, 450).

2. Lamp according to claim 1, **characterized in that** the projecting striation (S) is single.

3. Lamp according to claim 1 or 2, **characterized in that** the straightening out means comprise straightening out striations (60, 360, 460) projecting from the surface of said second element (50-650) towards the interior of the lamp and **in that** the projecting striation(s) (S, S3, S4) are more projecting towards the interior of the lamp than said straightening out striations (60, 360, 460) of the second elements (50-650).

4. Lamp according to anyone of claims 1 to 3, **characterized in that** each transition (R) between two second adjacent elements (350, 450) comprises N projecting striations with two oblique faces.

5. Lamp according to anyone of claims 1 to 4, **characterized in that** the light sources (20) are essentially aligned.

6. Lamp according to anyone of claims 1 to 5, **characterized in that** the projecting striation(s) (S, S3, S4) comprises (each comprise) two oblique and opposite faces relative to a plane (YZ) containing the general direction of emission (Y).

7. Optical plate (50) comprising optical processing means (S, S3, S4) adapted to straighten out, according to a general direction of emission (Y), the light emitted by a light source (340) and arriving on the plate (50) with a substantially constant, first given incidence (α), **characterized in that** part of said processing means is also exposed to the light from a second light source (440) arriving with a substantially constant second incidence (β) and is adapted to straighten out the light from the two light sources towards said general direction of emission (Y).

8. Optical plate (50) according to claim 7, **characterized in that** said part of the processing means comprises at least one projecting striation (S, S3, S4) with two faces.

9. Optical plate according to claim 8, **characterized in that** the projecting striation is single.

10. Optical plate according to claim 8 or 9, **characterized in that** straightening out striations (60, 360, 460), projecting from the surface of said plate (50), are provided and **in that** the projecting striation(s) (S, S3, S4) are more projecting outside the plate (50) than the straightening out striations (360, 460).

11. Optical plate according to anyone of claims 8 to 10, **characterized in that** the striations (S, S3, S4) are multiple.

12. Optical plate according to anyone of claims 7 to 11, **characterized in that** the value of said second incidence (β) is inverse to the value of said first incidence (α).

13. Optical plate according to anyone of claims 7 to 12, **characterized in that** the projecting striation(s) comprises (each comprise) two oblique and opposite faces relative to a plane (YZ) perpendicular to the line joining the two light sources (340, 440).

## Patentansprüche

1. Signalleuchte (F) für Kraftfahrzeuge, mit einer Vielzahl von Lichtquellen (20) und optischen Verarbeitungsmitteln (30, 40-640, 50-650, S, S3, S4), die das von den Lichtquellen abgegebene Licht so auszurichten vermögen, dass es sich in einer Richtung im Wesentlichen parallel zu einer allgemeinen Lichtabgaberichtung (Y) ausbreitet, wobei die optischen Verarbeitungsmittel jeder Lichtquelle zugeordnet ein erstes Element (40-640) umfassen, welches das Licht in einer Ebene im Wesentlichen senkrecht zur allgemeinen Lichtabgaberichtung (Y) im Wesentlichen gleichmäßig auf ein zweites Element (50-650) zu verteilen vermag, das allgemein plattenförmig ist und das einfallende Licht zu der allgemeinen Lichtabgaberichtung (Y) hin auszurichten vermag,
**dadurch gekennzeichnet, dass** am Übergang (R) zwischen zwei benachbarten zweiten Elementen (350, 450) wenigstens eine Rippe (S, S3, S4) vorgesehen ist, die nach innen in die Leuchte vorsteht und das von den zwei homologen Lichtquellen der zweiten Elemente (350, 450) abgegebene Licht in die allgemeine Lichtabgaberichtung (Y) auszurichten vermag.

2. Leuchte nach Anspruch 1,
**dadurch gekennzeichnet, dass** es sich bei der vorstehenden Rippe (S) um eine einzelne Rippe handelt.

3. Leuchte nach Anspruch 1 oder 2,
**dadurch gekennzeichnet, dass** die Ausrichtungsmittel Ausrichtungsrippen (60, 360, 460) aufweisen, die von der Oberfläche des zweiten Elements (50-650) nach innen in die Leuchte vorstehen, und dass die vorstehende(n) Rippe(n) (S, S3, S4) weiter nach innen in die Leuchte vorstehen als die Ausrichtungsrippen (60, 360, 460) der zweiten Elemente (50-650).

4. Leuchte nach einem der Ansprüche 1 bis 3,
**dadurch gekennzeichnet, dass** jeder Übergang (R) zwischen zwei benachbarten zweiten Elementen (350, 450) N vorstehende Rippen mit zwei schrägen Seiten aufweist.

5. Leuchte nach einem der Ansprüche 1 bis 4,
**dadurch gekennzeichnet, dass** die Lichtquellen (20) im Wesentlichen in einer Reihe angeordnet sind.

6. Leuchte nach einem der Ansprüche 1 bis 5,
**dadurch gekennzeichnet, dass** die vorstehende(n) Rippe(n) (S, S3, S4) jeweils zwei schräge und bezüglich einer die allgemeine Lichtabgaberichtung (Y) enthaltenden Ebene (YZ) entgegengesetzte Seiten aufweist.

7. Optische Platte (50) mit optischen Verarbeitungsmitteln (S, S3, S4), die das von einer Lichtquelle (340) abgegebene und auf die Platte (50) mit einem im Wesentlichen konstanten ersten gegebenen Einfallwinkel (α) treffende Licht in einer allgemeinen Lichtabgaberichtung (Y) auszurichten vermögen,
**dadurch gekennzeichnet, dass** ein Teil der Verarbeitungsmittel auch dem Licht einer zweiten Lichtquelle (440) ausgesetzt ist, das mit einem im Wesentlichen konstanten zweiten Einfallwinkel (β) ankommt, und das Licht der beiden Lichtquellen in die allgemeine Lichtabgaberichtung (Y) auszurichten vermag.

8. Optische Platte (50) nach Anspruch 7,
**dadurch gekennzeichnet, dass** dieser Teil der Verarbeitungsmittel wenigstens eine vorstehende Rippe (S, S3, S4) mit zwei Seiten aufweist.

9. Optische Platte nach Anspruch 8,
**dadurch gekennzeichnet, dass** es sich bei der vorstehenden Rippe um eine einzelne Rippe handelt.

10. Optische Platte nach Anspruch 8 oder 9,
**dadurch gekennzeichnet, dass** Ausrichtungsrippen (60, 360, 460) vorgesehen sind, die von der Oberfläche der Platte (50) vorstehen, und dass die vorstehende(n) Rippe(n) (S, S3, S4) aus der Platte (50) weiter vorstehen als die Ausrichtungsrippen (360, 460).

11. Optische Platte nach einem der Ansprüche 8 bis 10,
**dadurch gekennzeichnet, dass** die Rippen (S, S3, S4) mehrfach vorhanden sind.

12. Optische Platte nach einem der Ansprüche 7 bis 11,
**dadurch gekennzeichnet, dass** der Wert des zweiten Einfallwinkels (β) dem Wert des ersten Einfallwinkels (α) entgegengesetzt ist.

13. Optische Platte nach einem der Ansprüche 7 bis 12,
**dadurch gekennzeichnet, dass** die vorstehende(n) Rippe(n) jeweils zwei schräge Seiten umfassen, die bezüglich einer Ebene (YZ) entgegengesetzt sind, die zu der die beiden Lichtquellen (340, 440) verbindenden Linie lotrecht ist.
